# EUROPÄISCHE PATENTANMELDUNG

(11) **EP 2 460 847 A1**
(43) Veröffentlichungstag der Anmeldung: **06.06.2012**
(21) Anmeldenummer: 10193488.3
(22) Anmeldetag: 02.12.2010
(51) Int. Cl.: C08J 9/40, B01J 37/02, B22F 3/26

(54) **Schaum mit Füllung**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft offenzellige Schäume, die mit Polyamid gefüllt sind, sowie ein Herstellungsverfahren derselben.

## Beschreibung

Die vorliegende Erfindung betrifft offenzellige Schäume, die mit Polyamid gefüllt sind, sowie ein Herstellungsverfahren derselben.

Im Stand der Technik sind verschiedene Schäume bekannt, z. B. aus Polymermaterialien. Einen Überblick über verschiedene Arten von Schäumen bietet z. B. "Polymeric Foams and Foam Technology", herausgegeben von D. Klempner u. V. Sendijarevic, Carl Hanser Verlag, München, 2. Auflage, 2004. Hierbei kann "Schaum" definiert werden als ein Material, das durch Einbau von Gasblasen in eine Flüssigkeit oder einen Feststoff hergestellt wird.

Auch offenzellige Schäume sind grundsätzlich bekannt. Dabei bezeichnet der Begriff "offenzellig" eine Schaum-Struktur, die dadurch definiert ist, dass jede Zelle mindestens zwei Poren oder zerstörte Flächen aufweist. Außerdem muss die Mehrheit der Zellrippen zu mindestens drei Zellen gehören. Bei geschlossenzelligen Schäumen haben die Zellen dagegen keine Poren oder zerstörte Flächen. Offenzellige Kunststoff-Schäume werden meist auf der Basis von Polyethylen (PE), Polyurethan (PU) und Polyvinylchlorid (PVC) hergestellt (Dissertation Arnim Kraatz, 2007, Universität Halle). Üblicherweise ist ein offenzelliger Schaum eher weich.

Offenzellige Schäume können beispielsweise aus Metallen oder aus Kunststoffmaterialien bestehen.

Im Stand der Technik sind auch Verfahren beschrieben, mit denen die Eigenschaften eines Thermoplasten oder eines Duromers durch Einschluss anderer Substanzen modifiziert werden können. Beispiele für derartige Verfahren sind das Vermischen mit einem anderen Polymeren, wodurch ein homogenes System entsteht (z. B. PMMA und PSAN, oder PPO und Polystyrol - siehe Modern Styrenic Polymers, John Wiley and Sons, Ltd, 2003, Seite 699, Teil 6, "Styrenic Blends"), die Zugabe von Gleitmitteln, um die Fließfähigkeit zu erhöhen (Plastics Additives Handbook, 5th Edition, Hanser Publishers, Chapter 5, Lubricants), die Zugabe von Glasfasern, um die Steifigkeit zu erhöhen (Handbuch der Technischen Polymerchemie, VCH Verlag, 1993, Seite 651, Teil 12.4.5.1, verstärkte Kunststoffe), und das Einbringen von Kautschuk in einen starren Thermoplasten, um die Druckfestigkeit und Zähigkeit zu modifizieren ("Mechanical Properties of Polymers Based on Nanostructure and Morphology", Taylor and Francis Publishers, 2005, Chapter 11, "Structure-Property Relationships in Rubber Modified Amorphous Thermoplastic Polymers").

Durch einen Einschluss anderer Substanzen, z. B. von Polymeren, in einen Polymerschaum kann oftmals eine gegenseitige Verbesserung der mechanischen Eigenschaften der verschiedenen Komponenten, d. h. des Schaums und der im Schaum eingeschlossenen Polymersubstanz, erreicht werden (Verstärkungseffekt). Zum Beispiel wird in manchen Fällen ein Schmelzen des Schaums bei niedrigen Temperaturen verhindert, oder der Flammschutz wird verbessert.

Nach den bekannten Verfahren - es handelt sich dabei meist um Spritzgußverfahren - ist es bisher jedoch nicht möglich, ein gegenseitig durchdringendes Netzwerk ("interpenetrating network") eines Schaums mit Polymeren herzustellen, da die Viskosität der Polymeren in der Regel zu hoch ist. Die Poren eines Schaums können mit den bisher bekannten Verfahren nicht, oder jedenfalls nicht vollständig, mit einem Polymeren gefüllt werden. Bei den Versuchen, die Poren eines Schaums zu füllen, wird zudem oftmals der Schaum beschädigt oder zerstört.

Es stellte sich somit die Aufgabe, ein Verfahren bereitzustellen, mit welchem die Poren eines offenzelligen Schaums möglichst vollständig mit einem Polymeren gefüllt werden, ohne den Schaum dabei zu beschädigen. Dabei sollte ein Verbundwerkstoff mit verbesserten Eigenschaften entstehen, z. B. mit verbesserten mechanischen Eigenschaften, wie Zähigkeit, Dehnbarkeit und "Recovery after Compression" (Rückfederung nach Kompression).

Die oben genannte Aufgabe konnte nun überraschenderweise gelöst werden durch die katalysierte anionische Polymerisation von Lactam-Monomeren in Gegenwart offenzelliger Schäume.

Der Gegenstand der vorliegenden Erfindung ist somit ein Verfahren zur Herstellung eines Verbundwerkstoffs, wobei ein offenzelliger Schaum (S) wenigstens zum Teil mit mindestens einem Monomer (M) aus der Gruppe der Lactame getränkt wird, und das Monomer (M) nachfolgend wenigstens teilweise anionisch unter Einsatz eines Katalysators polymerisiert wird.

Weitere Gegenstände der vorliegenden Anmeldung sind auch ein Verbundwerkstoff, herstellbar nach dem erfindungsgemäßen Verfahren, sowie die Verwendung eines nach dem erfindungsgemäßen Verfahren herstellbaren Verbundwerkstoffs in Sportgeräten, als Flammschutzelement oder als Verstärkungselement.

In bevorzugten Ausführungsformen der vorliegenden Erfindung modifiziert eine der Phasen die andere positiv (gegenseitiger Verstärkungseffekt). Dieser Effekt kann genutzt werden z. B. zur Verstärkung, Schlagzähmodifizierung oder Verbesserung der Bruchdehnung eines Verbundwerkstoffs. Ein weiterer Vorteil ist die verringerte Wasseraufnahme des erfindungsgemäßen Verbundwerkstoffs, verglichen mit konventionell hergestellten Verbundwerkstoffen.

Der Begriff "Verbundwerkstoff" bezieht sich im Rahmen der vorliegenden Erfindung auf einen Werkstoff aus zwei oder mehr verbundenen unterschiedlichen Materialien.

Die Bezeichnung "Melamin-Formaldehyd-Schaum" umfasst Melamin/Formaldehyd-Kondensate, welche zusätzlich zu Melamin bis zu 50 Gew.-%, bevorzugt bis zu 20 Gew.-% andere Verbindungen enthalten können, die wärmehärtbare Harze bilden, und welche zusätzlich zu Formaldehyd bis zu 50 Gew.-%, bevorzugt bis zu 20 Gew.-%, andere Aldehyde als Co-kondensierte Einheiten enthalten können.

Jedoch ist erfindungsgemäß die Verwendung eines unmodifizierten Melamin/Formaldehyd-Kondensats bevorzugt.

Beispiele anderer Verbindungen, die wärmehärtbare Harze bilden, sind Alkyl-substituiertes Melamin, Urethane, aliphatische Amine, Phenol und Phenolderivate. Beispiele von verwendbaren Aldehyden sind Acetaldehyd, Acrolein, Benzaldehyd.

Weitere Details zu Melamin-/Formaldehyd-Kondensaten können Houben-Weyl, Methoden der organischen Chemie, Band 14/ 2, 1963, S. 319 bis 402 entnommen werden.

Das molare Verhältnis der Verbindung, die wärmehärtbares Harz bilden kann, zu Aldehyd kann innerhalb weiter Grenzen von 1:1,5 bis 1:4,5 variiert werden; im Falle von Melamin/Formaldehyd-Kondensaten beträgt es vorzugsweise von 1:2,5 bis 1: 3,5.

Die Melamin-Harze enthalten vorteilhafterweise co-kondensierte Sulfit-Gruppen. Weitere Details zu Melamin/Formaldehyd-Kondensaten können auch US 4,540,717 entnommen werden.

Nach dem erfindungsgemäßen Verfahren bilden der Schaum und das Polyamid jeweils eine kontinuierliche Phase. Das System umfasst also am Ende des Verfahrens mindestens zwei cokontiunierliche Phasen, bzw. mindestens zwei Hauptphasen. Es wird angenommen, dass die Morphologie des erfindungsgemäßen Verbundwerkstoffs hauptsächlich von der Porengröße bestimmt wird.

Im Einzelnen wird das erfindungsgemäße Verfahren wie folgt ausgeführt. Bevorzugt ist der Schaum dabei trocken.

Der Schaum (S) wird in Kontakt mit einer Mischung, z. B. einer Lösung, umfassend Monomer (M), Katalysator und optional Aktivator, in Kontakt gebracht. Dies kann z. B. durch Eintauchen des Schaums in eine Lösung aus Monomer (M), Katalysator und optional Aktivator geschehen, oder durch Sprühen dieser Lösung auf den Schaum (S), oder Bestreichen des Schaums mit der Lösung. Dieser Schritt wird bevorzugt unter Vakuum durchgeführt.

Die Temperatur für die nachfolgende Polymerisation beträgt in der Regel 85 °C bis 200 °C, bevorzugt 95 °C bis 180 °C, besonders bevorzugt 105 °C bis 160 °C.

Das Monomer (M) kann sich dabei ausschließlich in den Poren des Schaums (S) befinden. Es kann aber auch vorteilhaft sein, einen dünnen Polymerfilm auf der Oberfläche des Schaums (S), und somit des Werkstoffs (W), zu haben.

Das Verhältnis von Schaum (S) zu Monomer (M) kann variiert werden. Es beträgt in der Regel 90:10 bis 10:90, bevorzugt 80:20 bis 20 bis 80, besonders bevorzugt 60:40 bis 40:60.

Der Schaum kann erfindungsgemäß beispielsweise aus Metall, Kunststoff oder aus einem Naturprodukt wie Holz (zum Beispiel Balsaholz) bestehen. Der Schaum kann auch aus Mischungen dieser Materialien bestehen.

In einer bevorzugten Ausführungsform besteht der Schaum aus Metall oder aus Mischungen von Kunststoff mit Metall. Als Metall sind dabei Metalle aus der Gruppe enthaltend Aluminium und Magnesium bevorzugt.

In einer weiteren bevorzugten Ausführungsform besteht der Schaum aus Kunststoff.

Beispiele für Kunststoffe, die geeignete Schäume bilden können, sind PSU (Polysulfon), PEI (Polyetherimid), Pl (Polyimid), Polyurethane, PA (Polyamid), PLA (Polylactid), PPE/PS (Polyphenylen-ether/Polystyrol), Amsan (Acrylonitril/alpha-Methylstyrol), PC (Polycarbonat), Polypropylen, Melamin-Formaldehyd.

Besonders bevorzugt ist dabei Melamin-Formaldehyd-Schaum, beispielsweise Basotect® der BASF SE.

Der Schaum sollte erfindungsgemäß temperaturbeständig bis zu 90°C, bevorzugt bis 105° C, besonders bevorzugt bis 130°C sein.

Der Schaum kann eine unregelmäßige oder regelmäßige Porenstruktur besitzen. Beispiel für das Letztere ist eine Wabenstruktur, wie sie z. B. in Bienenstöcken vorkommt. Diese Struktur besitzt meistens eine sechseckige Porenstruktur.

Als Monomer (M) wird eine Verbindung aus der Gruppe der Lactame verwendet. Beispiele hierfür sind Caprolactam, Piperidon, Pyrrolidon, Lauryllactam oder deren Mischungen, bevorzugt Caprolactam, Lauryllactam oder deren Mischungen, besonders bevorzugt Caprolactam oder Lauryllactam.

Als Katalysator eignen sich u. a. Natriumcaprolactamat, Kaliumcaprolactamat, Bromidmagnesiumcaprolactamat, Chloridmagnesiumcaprolactamat, Magnesiumbiscaprolactamat, Natriumhydride, Natriummetall, Natriumhydroxid, Natriummethoxid, Natriumethoxid, Natriumpropoxid, Natriumbutoxid, Kaliumhydrid, Kaliummetall, Kaliumhydroxid, Kaliummethoxid, Kaliumethoxid, Kaliumpropoxid, Kaliumbutoxid, bevorzugt Natriumhydride, Natriummetall, Natriumcaprolactamat, besonders bevorzugt Natriumcaprolactamat (z. B. Bruggolen® C 10, eine Lösung aus 18 Gew.-% Natriumcaprolactamat in Caprolactam).

In einer bevorzugten Ausführungsform der Erfindung wird mindestens ein Aktivator (auch Initiator genannt) verwendet. Es ist jedoch nicht zwingend notwendig, einen Aktivator zu verwenden.

Als Aktivator eignen sich u. a. aliphatische Diisocyanate wie Butylendiisocyanat, Hexamethylendiisiocyanat, Octamethylendiisocynat, Decamethylendiisocyanat, Undodecamethylendiisocyanat, Dodecamethylendiisocyanat, oder auch aromatische Diisocyanate wie Toluyldiisocyanat, Isophorondiisocyanat, 4,4'-Methylenbis(phenyl-isocyanat), 4,4'-Methylenbis(cyclohexylisocyanat) oder Polyisocyanate wie Isocyanate von Hexamethylendiisocyanat, Basonat® HI 100 der BASF SE, Allophanate wie Ethylallophanat oder deren Mischungen, bevorzugt Hexamethylendiisiocyanat, Isophorondiisocyanat, besonders bevorzugt Hexamethylendiisiocyanat. Als Aktivator eignen sich zudem auch Säurehalogenide oder alle Umsetzungsprodukte von Säurehalogeniden oder Isocyanaten mit Lactamen.

Das Molverhältnis von Lactam zum Katalysator kann in weiten Grenzen variiert werden, beträgt in der Regel 1:1 bis 10.000:1, bevorzugt 10:1 bis 1.000:1, besonders bevorzugt 50:1 bis 300:1. Das Molverhältnis von Aktivator zum Katalysator kann in weiten Grenzen variiert werden, beträgt in der Regel 100:1 bis 1:10.000, bevorzugt 10:1 bis 1:100, besonders bevorzugt 1:1 bis 1:10.

Nach Beendigung des erfindungsgemäßen Verfahrens, also nach Beendigung der Polymerisation des Monomers (M), kann der Verbundwerkstoff wahlweise noch nachgeformt werden, z. B. durch Erhitzen und Biegen.

Der nach dem erfindungsgemäßen Verfahren herstellbare Verbundwerkstoff kann vorteilhaft unter anderem als Flammschutzelement oder Verstärkungselement, beispielsweise im Automobilbau, oder in Sportgeräten verwendet werden.

Die folgenden Beispiele dienen der Veranschaulichung einiger Aspekte der vorliegenden Erfindung. Sie sollten keinesfalls als einschränkend für den Umfang der Erfindung angesehen werden.

Alle Komponenten und Arbeitsgeräte waren trocken.

Ein Schaum aus Basotect® (ein flexibler, offenzelliger Schaumstoff aus Melaminharz) mit den Dimensionen 55x20x95 mm³ wurde in eine Schale aus Alufolien mit der Dimensionen 65x30x105 mm³ gelegt. Die Schale wurde für mehrere Stunden in einen Trockenschrank bei 150°C unter Stickstoff gegeben.

Folgende Lösungen wurden getrennt in zwei Glaskolben unter Stickstoff hergestellt:
1: 38,45 g Caprolactam + 11,55 g Bruggolen® C10 (ein Katalysator zur Herstellung von Polyamid der Firma Brüggemann; 17% Na-Caprolactam in Caprolactam)
2: 44,89 g Caprolactam + 5,11 g Bruggolen® C20 (ein Aktivator zur Herstellung von Polyamid der Firma Brüggemann; 80% blockierte Diisocyanate in Caprolactam),
und mit Hilfe eines Magnetrührers aufgeschmolzen. Bei 110°C wurden die Lösungen 1 und 2 gemischt, 15 Sekunden durchgemischt und dann in die Aluminiumschale im Trockenschrank unter N₂ zugegeben, bis sie voll war. Überflüssige Flüssigkeit wurde durch kurzes Schütteln entfernt. Nach 10 Minuten war die Polymerisation beendet. Die Aluminiumschale wurde aus dem Trockenschrank geholt und gekühlt. Das Formteil wurde aus der Aluminiumschale entfernt. Es bestand aus einem gegenseitig durchdrungenen ("interpenetrated") Netzwerk aus Schaum (Basotect® der BASF), gefüllt mit Polycaprolactam. VZ (Viskositätszahl) = 180, Rest Caprolactam = 1,9 Gew.-%

Die Dichte des Formteils betrug 1,1 g/mL.

### Beispiel 2:

Ein offenzelliger Schaum aus Polyamid (PA) mit den Dimensionen 55x20x95 mm³ wurde in einen Glaskolben gelegt. Der Kolben wurde bei 150°C für mehrere Stunden evakuiert. Folgende Lösungen wurden getrennt in zwei Glaskolben unter Stickstoff hergestellt:
1: 38,45 g Caprolactam + 11,55 g Bruggolen® C10
2: 44,89 g Caprolactam + 5,11 g Bruggolen® C20,
und mit Hilfe eines Magnetrührers aufgeschmolzen. Bei 110°C wurden die Lösungen 1 und 2 gemischt, 15 Sekunden durchgemischt und dann zu dem PA-Schaum über ein Ventil gegeben. Nach 10 Minuten war die Polymerisation beendet.

Ein mikroskopischer Querschnitt durch den Schaum zeigte, dass ein "interpenetrating" Netzwerk vorhanden war.

Vor und nach der Behandlung mit dem Caprolactam-Monomeren wurde der Schaum jeweils für 30 Minuten in Wasser getaucht. Es zeigte sich, dass die Wasseraufnahme vor der Behandlung deutlich höher war als nachher.

Auch die Steifigkeit des Schaums war nach der Caprolactam-Polymerisation deutlich höher als vorher.

## Patentansprüche

1. Verfahren zur Herstellung eines Verbundwerkstoffs, wobei ein offenzelliger Schaum (S) wenigstens zum Teil mit mindestens einem Monomer (M) aus der Gruppe der Lactame getränkt wird, und das Monomer (M) nachfolgend wenigstens teilweise anionisch unter Einsatz eines Katalysators polymerisiert wird.

2. Verfahren nach Anspruch 1, wobei der Schaum (S) aus Kunststoff und/oder Metall besteht.

3. Verfahren nach Anspruch 1 oder 2, wobei der Schaum (S) ein Melamin-Formaldehyd-Schaum ist.

4. Verfahren nach einem der Ansprüche 1 bis 3, wobei das Monomer (M) ausgewählt ist aus der Gruppe umfassend Caprolactam, Piperidon, Pyrrolidon, Lauryllactam und deren Mischungen.

5. Verfahren nach einem der Ansprüche 1 bis 4, wobei der Katalysator ausgewählt ist aus der Gruppe umfassend Natriumcaprolactamat, Kaliumcaprolactamat, Bromidmagnesiumcaprolactamat, Chloridmagnesiumcaprolactamat, Magnesiumbiscaprolactamat, Natriumhydride, Natriummetall, Natriumhydroxid, Natriummethoxid, Natriumethoxid, Natriumpropoxid, Natriumbutoxid, Kaliumhydrid, Kaliummetall, Kaliumhydroxid, Kaliummethoxid, Kaliumethoxid, Kaliumpropoxid, Kaliumbutoxid.

6. Verfahren nach einem der Ansprüche 1 bis 5, wobei bei der anionischen Polymerisation ein Aktivator zum Einsatz kommt.

7. Verfahren nach einem der Ansprüche 1 bis 6, wobei der Schaum eine Wabenstruktur aufweist.

8. Verbundwerkstoff, herstellbar nach dem Verfahren eines der Ansprüche 1 bis 7.

9. Verwendung eines nach dem Verfahren eines der Ansprüche 1 bis 7 herstellbaren Verbundwerkstoffs in Sportgeräten, als Flammschutzelement oder als Verstärkungselement.
